# EUROPÄISCHE PATENTANMELDUNG

(11) **EP 3 974 675 A1**
(43) Veröffentlichungstag der Anmeldung: **30.03.2022**
(21) Anmeldenummer: 21198751.6
(22) Anmeldetag: 24.09.2021
(51) Int. Cl.: F16F 7/12, B62D 21/15, B60N 2/427, B62D 25/00

(54) **ZUR ENERGIEABSORPTION VORGESEHENES BAUTEIL**

(30) Priorität: 25.09.2020 DE 102020212131
(71) Anmelder: Brose Fahrzeugteile SE & Co. Kommanditgesellschaft, Coburg, 96450 Coburg (DE)
(72) Erfinder: SANDER, Jan, 96484 Meeder (DE)
(74) Vertreter: Maikowski & Ninnemann Patentanwälte Partnerschaft mbB

(57) **Zusammenfassung**

Die vorgeschlagene Lösung betrifft ein Bauteil, das für eine Energieabsorption bei einer auf das Bauteil (1) einwirkenden Kraft (F) vorgesehen ist.

Das Bauteil (1) ist mit einer wenigstens einen ersten Energieabsorptionsmechanismus und wenigstens einen zweiten Energieabsorptionsmechanismus integrierenden Bauteilstruktur (10) ausgebildet ist, mit der bei einer auf das Bauteil (1) einwirkenden und einen Schwellwert übersteigenden Kraft die ersten und zweiten Energieabsorptionsmechanismen aktivierbar sind.

## Beschreibung

Die vorgeschlagene Lösung betrifft ein Bauteil für eine Energieabsorption bei einer auf das Bauteil einwirkenden Kraft.

Bauteile zur Absorption von Energie, die auf eine von außen auf das Bauteil aufgebrachte Kraft zurückgeht, sind weithin bekannt, zum Beispiel als sogenannte Crashabsorber im Automobilbereich. Typischerweise stützen sich derartige Bauteile auf einen einzigen Energieabsorptionsmechanismus, um Energie zu absorbieren. Beispiele hierfür sind zum Beispiel geschäumte Bauteilstrukturen, additiv gefertigte Gitterstrukturen oder Stauchrohre. Derartige Bauteile sind jeweils für eine Energieabsorption durch plastische Verformung ausgebildet. Die Möglichkeit, Energie zu absorbieren, ist bei den bisher bekannten Bauteilen aufgrund des jeweils genutzten Energieabsorptionsmechanismus limitiert. Im Übrigen ist die Auslegung entsprechender Bauteile zum Teil schwierig, da das Verformungsverhalten unter Umständen schwer vorhersehbar ist und die jeweiligen Strukturen teilweise sehr empfindlich auf Schwankungen in den Werkstoffeigenschaften reagieren.

Der vorgeschlagenen Lösung liegt damit die Aufgabe zugrunde, in dieser Hinsicht eine Verbesserung bereitzustellen.

Diese Aufgabe ist mit einem Bauteil des Anspruchs 1 gelöst.

Ein vorgeschlagenes Bauteil ist hierbei mit einer Bauteilstruktur ausgebildet, die wenigstens einen ersten Energieabsorptionsmechanismus und wenigstens einen zweiten (zu dem ersten Energieabsorptionsmechanismus verschiedenen) Energieabsorptionsmechanismus integriert.

Grundgedanke der vorgeschlagenen Lösung ist somit ein Bauteil mit einer Bauteilstruktur auszubilden, in die zwei unterschiedliche, d.h. z.B. auf unterschiedlichen Wirkprinzipen beruhende Energieabsorptionsmechanismen integriert sind und die auf Basis wenigstens eines Schwellwerts für wenigstens eine auf das Bauteil wirkenden (und hinsichtlich einer Wirkrichtung vorgegebenen) Kraft derart konfiguriert ist, dass die wenigstens zwei unterschiedlichen Energieabsorptionsmechanismen gleichzeitig oder zeitlich aufeinanderfolgend aktiv werden. Es werden somit wenigstens zwei unterschiedliche Energieabsorptionsmechanismen vorgesehen, die in die Bauteilstruktur unmittelbar integriert sind. Wenigstens einer der Energieabsorptionsmechanismen kann hierbei auf einem Wirkprinzip beruhen, das zur Energieabsorption plastische Verformung, Scherung, Bruch, Verhaken oder Reibung nutzt. Durch das Vorsehen unterschiedlicher und damit gegebenenfalls auf unterschiedlichen Wirkprinzipien basierenden Energieabsorptionsmechanismen, die jeweils integraler Bestandteil der das Bauteil bildenden Bauteilstruktur sind, ist das jeweilige Bauteil nicht nur spezifischer an unterschiedliche Nutzung- und Versagensszenarios angepasst. Vielmehr lässt sich auch bei identischen Abmessungen des Bauteils eine größere Energieabsorptionsfähigkeit realisieren.

In einer Ausführungsvariante sind mit der die wenigsten zwei unterschiedlichen Energieabsorptionsmechanismen integrierenden Bauteilstruktur die ersten und zweiten Energieabsorptionsmechanismen zeitlich aufeinanderfolgend aktivierbar, sodass ein Teile der über die einwirkende Kraft in das Bauteil eingebrachten Energie über den ersten Energieabsorptionsmechanismus absorbiert wird, bevor der wenigstens eine zweite Energieabsorptionsmechanismus aktiviert wird. Bei der hier vorgeschlagenen Ausführungsvariante sind folglich innerhalb der Bauteilstruktur die Energieabsorptionsmechanismen derart miteinander verkettet, dass diese - bei unveränderter Krafteinwirkung - zeitlich aufeinanderfolgend aktiviert werden. Dies schließt weiterhin die Möglichkeit ein, dass die wenigstens zwei unterschiedlichen Energieabsorptionsmechanismen nach einer zeitlich versetzten Aktivierung dennoch noch teilweise gleichzeitig ablaufen können. Beispielsweise wird der erste Energieabsorptionsmechanismus durch die den Schwellwert übersteigende Kraft auf das Bauteil aktiv und resultiert in einer plastischen Verformung mindestens eines Abschnitts der Bauteilstruktur, in Folge der der wenigstens eine weitere, zweite Energieabsorptionsmechanismus aktiviert wird, während die Energieabsorption über die plastische Verformung weiter anhält.

Grundsätzlich kann eine Aktivierung wenigstens eines der ersten und zweiten Energieabsorptionsegoismen eine plastische Verformung mindestens eines Abschnitts der Bauteilstruktur voraussetzen. Wenigstens einer der in die Bauteilstruktur integrierten ersten und zweiten Energieabsorptionsmechanismen ist hier folglich konfiguriert und ausgebildet, durch plastische Verformung wenigstens eines Abschnitts des Bauteils aktiviert zu werden.

Hierunter wird beispielsweise verstanden, dass wenigstens einer der ersten und zweiten Energieabsorptionsmechanismen innerhalb der Bauteilstruktur (Soll-) Bruchstellen für einen Bruch oder mehrere Brüche, insbesondere einen Scherbruch oder mehrere Scherbrüche definiert. Entsprechende Bruchstellen sind hierbei dann Teil des jeweiligen Energieabsorptionsmechanismus, der bei auf das Bauteil wirkender und den Schwellwert übersteigenden Kraft Energie durch wenigstens einen Bruch absorbiert, der an einer oder mehrerer hierfür vordefinierter Bruchstellen auftritt. Eine Bruchstelle ist hierbei beispielsweise über ein Schwächungsbereich in der Bauteilstruktur, in dem eine Materialstärke lokal reduziert ist, oder eine gezielt lokal erhöhte Eigenspannung in der Bauteilstruktur definiert.

Beispielsweise ist wenigstens eine Bruchstelle an einem mindestens eine Aussparung in der Bauteilstruktur berandenden Bereich der Bauteilstruktur vorgesehen. Über die mindestens eine Aussparung und deren Berandung lässt sich nicht nur das Auftreten, sondern auch die Ausbreitung eines Risse infolge eines Bruches, z.B. eines Scherbruches, gezielt in Abhängigkeit von einer einwirkenden Kraft steuern.

Ein berandender Bereich, an dem wenigstens eine Bruchstelle vorgesehen ist, liegt in einer Ausführungsvariante zwischen zwei Aussparungen in der Bauteilstruktur vor, sodass sich, bei einer den Schwellwert übersteigenden Kraft auf das Bauteil, ein an der wenigstens einen Bruchstelle entstehender Bruch zwischen den zwei Aussparungen ausbreitet und damit letztlich zwischen den zwei Aussparungen verläuft und derart zu einer Verbindung der zwei Aussparungen führt. Durch einen entlang der vorgesehenen Bruchstelle(n) auftretenden und hierüber gelenkten Bruch kommt es dann beispielsweise zur wenigstens lokalen Zerstörung einer zwischen den zwei Aussparungen in der Bauteilstruktur vorgesehenen Trennwand.

Beispielsweise sind in der Bauteilstruktur vorgesehene Aussparungen für die Steuerung der Energieabsorption im Querschnitt ellipsenförmig, insbesondere kreisförmig, sechseckig, insbesondere wabenförmig oder achteckig ausgebildet. Über Geometrie und Größe der jeweiligen Aussparungen wird ein bestimmter Verlauf eines in Folge der auf das Bauteil wirkenden Kraft verursachten und für die Energieabsorption gezielt zugelassenen Bruchs, insbesondere Scherbruchs und eines hiermit verursachten Risses in der Bauteilstruktur erreicht.

In einem Ausführungsbeispiel umfasst einer der ersten und zweiten Energieabsorptionsmechanismen eine Schnittstelle innerhalb der Bauteilstruktur für einen Energie absorbierenden Kraft- und/oder Formschluss bei einer den Schwellwert überschreitenden Kraft auf das Bauteil. Im Zuge eines solchen Ausführungsbeispiels sieht folglich wenigstens einer der ersten und zweiten Energieabsorptionsmechanismen die Bereitstellung eines Kraft- und/oder Formschlusses innerhalb der Bauteilstruktur vor, der erst aufgrund der den Schwellwert überschreitenden Kraft auf das Bauteil innerhalb des Bauteils entsteht. Dies schließt beispielsweise ein, dass Bereiche innerhalb der Bauteilstruktur durch die Kraft erst miteinander in Kontakt gebracht werden, um der auf das Bauteil wirkenden Kraft einen zusätzlichen Widerstand entgegen zu bringen und hierüber (zusätzliche) Energie zu absorbieren.

Beispielsweise umfasst der zweite Energieabsorptionsmechanismus die Schnittstelle und der erste Energieabsorptionsmechanismus definiert wenigstens einen mit der Schnittstelle, bei einer den Schwellwert übersteigenden Kraft auf das Bauteil, zumindest teilweise kraft- und/oder formschlüssig in Kontakt bringbaren ersten Kontaktbereich. Insbesondere kann in diesem Zusammenhang, wie vorstehend erläutert, vorgesehen sein, dass zunächst der erste Energieabsorptionsmechanismus infolge der auf das Bauteil wirkenden Kraft aktiv wird, bevor der zweite Energieabsorptionsmechanismus aktiv wird. Derart kann beispielsweise zur Energieabsorption über den ersten Energieabsorptionsmechanismus eine plastische Verformung wenigstens eines Abschnitts des Bauteils vorausgesetzt sein, infolge der der erste Kontaktbereich der Schnittstelle für den Kraft- und/oder Formschluss angenähert wird.

Beispielsweise ist die Schnittstelle von mindestens einem zumindest teilweise gegenüber einem angrenzenden Bereich der Bauteilstruktur zurückgesetzten zweiten Kontaktbereich gebildet, in den wenigstens ein Teil des ersten Kontaktbereichs, bei einer den Schwellwert übersteigenden Kraft auf das Bauteil und unter plastischer Verformung wenigstens eines Abschnitts des Bauteils, eingreifen kann. Beispielsweise weist der erste Kontaktbereich des ersten Energieabsorptionsmechanismus mindestens eine der Bruchstellen für den Scherbruch auf. Damit ist beispielsweise ermöglicht, dass bei der den Schwellwert übersteigenden Kraft auf das Bauteil an dem ersten Kontaktbereich mindestens ein Scherbruch auftritt respektive gezielt zugelassen ist, um einen dann lokal durch den Scherbruch verlagerbaren Teil des ersten Kontaktbereichs in kraft- oder/und formschlüssig in Eingriff mit der Schnittstelle des zweiten Kontaktbereichs zu bringen, um hierüber den zweiten Energieabsorptionsmechanismus zu aktivieren und zusätzliche Energie zu absorbieren. So ist der erste Kontaktbereich in der der Bauteilstruktur dann derart ausgebildet und dimensioniert, dass, bei einer den Schwellwert übersteigenden Kraft auf das Bauteil, an dem ersten Kontaktbereich mindestens eine (Scher-)Bruchfläche auftritt und eine gegenüber dem angrenzenden zweiten Kontaktbereich vorstehende Scherbruchfläche entsteht. Diese Scherbruchfläche ist bei weiter auf das Bauteil einwirkender Kraft in kraft- und/oder formschlüssigen Kontakt mit dem zweiten Kontaktbereich bringbar. Über die Gestaltung und Dimensionierung des ersten Kontaktbereichs in der Bauteilstruktur wird somit beispielsweise eine einer plastischen Verformung des Bauteils gezielt nachgeschaltete oder damit einhergehende Energieabsorption gestattet. Infolge der auf das Bauteil einwirkenden Kraft wird nachträglich wenigstens ein Kraft- und/oder Formbeschlusses innerhalb der Bauteilstruktur erzeugt, der für einen Beitrag zu Energieabsorption leistet.

Beispielsweise umfasst der zweite Kontaktbereich eine Mantelfläche einer in der Bauteilstruktur vorgesehenen Aussparung, an deren angrenzendem Bereich die Bruchstelle für einen Bruch vorgesehen ist. Bei einem Scherbruch in dem zweiten Kontaktbereich entsteht wenigstens eine Scherbruchfläche, die einer Mantelfläche einer zuvor bereits vorhandenen Aussparung in der Bauteilstruktur angenähert wird und hier an der Mantelfläche kraft- und/oder formschlüssig in Kontakt gebracht wird, um hierüber zusätzlich Energie zu absorbieren.

Beispielsweise ist der erste Kontaktbereich durch eine Trennwand zwischen zwei Aussparungen gebildet, die sich mit einer Wandlänge entlang einer Raumrichtung erstreckt. Die Wandlänge dieser Trennwand ist dann geringer als eine Aussparungslänge, mit der sich jede der zwei Aussparungen entlang derselben Raumrichtung erstreckt. Eine Länge einer an der Trennwand durch Scherbruch entstehenden Scherfläche ist somit in jedem Fall kleiner als die Aussparungslänge, sodass der abgescherte Teil der (gebrochenen) Trennwand bei aktivem Energieabsorptionsmechanismus in jedem Fall in eine angrenzende Aussparung zur Herstellung eines zusätzlichen Energie absorbierenden Kraft- und/oder Formschlusses eintauchen kann. Durch einen Kraftschluss entstehende Reibungsverluste respektive durch einen Formschluss, insbesondere eine Verhakung sich ergebende erhöhte Widerstandskräfte wirken einer weiteren plastischen Verformung entgegen und dienen somit der zusätzlichen Energieabsorption.

In einer Ausführungsvariante ist die Bauteilstruktur gitterförmig ausgebildet. Insbesondere in einer derartigen gitterförmigen Bauteilstruktur können die vorstehend erläuterten Ausführungsvarianten erster und zweiter Energieabsorptionsmechanismen effektiv integriert werden. Eine Aussparung ist hierbei dann beispielsweise durch eine (Elementar-) Zelle innerhalb des Gitters definiert, die durch umfangseitige Stege von weiteren Elementarzellen der gitterförmigen Bauteilstruktur getrennt ist.

Beispielsweise erstreckt sich die gitterförmige Bauteilstruktur entlang dreier zueinander senkrechter Raumrichtungen, wobei in zwei zueinander senkrechten Querschnittsansichten eine Gitterstruktur jeweils mit in einem Muster angeordneten Aussparungen gebildet ist. Die Aussparungen zweier Querschnittsansichten sind hierbei in einer Ausführungsvariante unterschiedlich. Die unterschiedlichen Muster der zwei zueinander senkrechten Querschnittsansichten können hierbei insbesondere in zwei Seitenansichten des Bauteils sichtbar sind, die sich entlang zweier zueinander senkrechter Blickrichtungen auf das Bauteil ergeben. Sind die drei Raumrichtungen entsprechen einem kartesischen Koordinatensystem mit x, y und z bezeichnet, sind beispielsweise in einer xz-Ebene und in einer yz-Ebene unterschiedliche Muster für die Gitterstruktur(en) vorgesehen.

Auch können sich die Aussparungen zweier Querschnittsansichten hinsichtlich ihrer Abmessungen und/oder hinsichtlich ihrer jeweiligen geometrischen Form voneinander unterscheiden. Sind die Aussparungen beispielsweise lediglich hinsichtlich ihrer Abmessungen, und damit insbesondere hinsichtlich ihres Umfangs und/oder ihrer Querschnittsfläche zueinander unterschiedlich, können sie weiterhin dieselbe Geometrie aufweisen und damit im geometrischen Sinne ähnlich sein. Bei sich hinsichtlich ihrer jeweiligen geometrischen Form voneinander unterscheidenden Aussparungen sind die Formen der Aussparungen geometrisch zueinander unähnlich. Beispielsweise sind in einer ersten Querschnittsansicht ersichtliche Aussparungen jeweils sechseckig und Aussparungen in einer zweiten, zu der ersten Querschnittsansicht senkrechten Querschnittsansicht jeweils achteckig (und damit geometrisch zu den Aussparungen der ersten Querschnittsansicht unähnlich).

Mit Blick auf die Steuerung eines oder mehrerer Scherbrüche und damit der Entstehung und der Ausbreitung eines Risses innerhalb der Bauteilstruktur kann eine Ausführungsvariante vorsehen, dass in dem Bauteil in einer Querschnittsansicht vier um einen Tragabschnitt der gitterförmigen Bauteilstruktur verteilt angeordnete Aussparungen vorhanden sind, wobei der Tragabschnitt in einem Kreuzungspunkt von die Aussparungen berandenden Trennwänden liegt. Der Tragabschnitt weist hierbei ein größeres Widerstandsmoment auf als jede der vier Trennwände. Der im Kreuzungspunkt liegende Tragabschnitt ist somit mit einem größeren Widerstandsmoment ausgelegt/gestaltet und dimensioniert, sodass im Fall der einen Schwellwert übersteigenden Kraft auf das Bauteil bevorzugt an den Trennwänden ein Bruch, z.B. ein Scherbruch, nicht aber an dem Tragabschnitt auftritt.

Mit Blick auf eine verbesserte Modellierung und (z.B. additive) Fertigung einer gitterförmigen Bauteilstruktur sieht eine Ausführungsvariante vor, dass der gitterförmigen Bauteilstruktur wenigstens ein Gitter zugrunde liegt, dass aus identischen Elementarzellen aufgebaut ist. Bei den Elementarzellen sind Geometrie, Abmessungen, Dicke eine Elementarzelle jeweils berandender Stege und/oder Volumenfüllgrad auf Basis einer vordefinierten Referenzzelle vorgegeben, und zwar in Abhängigkeit von einem Verwendungszweck, einem mit der Bauteilstruktur zu bildenden Abschnitt des Bauteils und/oder von auf das Bauteil in einem bestimmungsgemäß erbauten Zustand einwirkenden Kräften. Ausgangspunkt für ein Gitter (von gegebenenfalls mehreren unterschiedlichen Gittern), das die gitterförmige Bauteilstruktur definiert, ist somit eine vordefinierte Referenzzelle, die in Abhängigkeit von bestimmten Bauteilparametern variiert ist, um die Gestalt der Elementarzelle für das verwendete Gitter vorzugeben. Eine gitterförmige Bauteilstruktur lässt sich derart in einfacher Weise auf Basis einer definierten Referenzzelle computergestützt und wenigstens teilautomatisiert entwickeln, indem lediglich die entsprechenden Bauteilparameter vorgegeben werden.

Grundsätzlich kann ein erster Abschnitt des Bauteils vorgesehen sein, bei dem eine Gitterstruktur mit einem ersten Gitter gebildet ist, während ein einstückig hiermit ausgebildeter zweiter Abschnitt des Bauteils mit einer Gitterstruktur ausgebildet ist, der ein verschiedenes zweites Gitter zugrunde liegt. Das Bauteil integriert hier somit zwei unterschiedliche Gitterstrukturen. Die Gitterstrukturen können jeweils mit auf eine bestimmte Referenzzelle zurückgehenden Elementarzellen gebildet sein. Derart kann das Bauteil computergestützt mit unterschiedlichen Gitterstrukturen vergleichsweise einfach ausgelegt werden, indem letztlich lediglich unter Zugrundelegung der einen Referenzzelle in Abhängigkeit von vorzugeben Bauteilparametern eine Elementarzelle errechnet und hieraus eine Gitterstruktur für den jeweiligen Abschnitt vorgegeben wird. Dies schließt insbesondere ein, dass an dem Bauteil verschiedene Zonen mit unterschiedlicher Energieabsorptionsfähigkeit aufgrund unterschiedlich gestalteter Gitterstrukturen ausgebildet sind.

Beispielsweise ist ein erster Abschnitt des Bauteils für eine lokal an dem Bauteil auftretende Belastung ausgelegt, die sich von einer Belastung unterscheidet, für die der zweiter Abschnitt mit einer abweichend gestalteten Gitterstruktur ausgelegt ist. Insbesondere kann hierbei der erste Abschnitt zur Absorption einer Menge von (Crash-) Energie ausgelegt sein, die sich um wenigstens eine Größenordnung von einer Menge an Energie unterscheidet, zu deren Absorption der zweite Abschnitt mit dem abweichend gestalteten Gitter ausgelegt ist.

Ein vorgeschlagenes zur Energieabsorption vorgesehenes Bauteil kann insbesondere für ein Fahrzeug und hierbei insbesondere in einem crashrelevanten Bereich vorgesehen sein. Dies schließt beispielsweise eine Baugruppe für ein Fahrzeuginnenraum ein, hier insbesondere eine Komponente eines Fahrzeugsitzes. Für den Innenraum vorgesehene und mit einer Ausführungsvariante eines vorgeschlagenen Bauteils gebildete (Innenraum-) Komponenten können ferner auch Konsolenelementen sowie beispielsweise Tische, Bildschirmhalter, Fußauflagen oder Verdeckteile sein. Grundsätzlich kann auch eine Fahrzeugtür mit einer Ausführungsvariante eines vorgeschlagenen Bauteils ausgebildet sein. Insbesondere kann das Bauteil als sogenannter Crashabsorber in einem Fahrzeug, z.B. an einem frontseitigen, heckseitigen, türseitigen, sitzseitigen oder A-, B- oder C-säulenseitigen Crashabsorber vorgesehen sein oder diesen bilden.

Unabhängig von der Verwendung in einem Fahrzeug kann das Energie absorbierende Bauteil auch für gepanzerte Strukturen, beispielsweise in einer Panzerplatten-Rückseitenstruktur, als Aufpralldämpfer in Maschinen, insbesondere Werkzeugmaschinen, oder in einer Schutzausrüstung für eine Person, einschließlich einem Helm, einem Protektor oder Schuhkappen Verwendung finden. Auch hier können über die vorgeschlagene Lösung, die über wenigstens zwei in einer Bauteilstruktur integrierte, unterschiedliche Energieabsorptionsmechanismen zu einer höheren Energieabsorption pro Volumen respektive Gewicht eines Bauteils führt, deutliche Vorteile erzielt werden und beispielsweise zu einer geringeren Größe, geringerem Gewicht, höherem Komfort und höherer Sicherheit führen.

Die beigefügten Figuren veranschaulichen exemplarisch mögliche Ausführungsvarianten der vorgeschlagenen Lösung.

### Hierbei zeigen:

- Figuren 1A-1F: eine Ausführungsvariante eines vorgeschlagenen Bauteils bei Belastung mit einer einen Schwellwert überschreitenden Kraft, die als Biegekraft auf das Bauteil einwirkt und zur Aktivierung unterschiedlicher Energieabsorptionsmechanismen innerhalb des Bauteils führt, bevor ein Versagen des Bauteils auftritt;
- Figuren 2A-2B: in verschiedenen Ansichten eine Weiterbildung des Bauteils der Figuren 1A bis 1F mit einer abweichend gestalteten gitterförmigen Bauteilstrukturen;
- Figur 3: ausschnittsweise und in Seitenansicht eine weitere Ausführungsvariante eines vorgeschlagenen Bauteils mit einem Y-förmigen und durch eine gitterförmige Bauteilstruktur gebildeten Endabschnitt;
- Figur 4: ausschnittsweise eine weitere Ausführungsvariante eines vorgeschlagenen Bauteils mit einem O-förmigen Abschnitt, an dem eine gitterförmige Bauteilstruktur vorgesehen ist;
- Figuren 5A-5B: eine weitere Ausführungsvariante eines vorgeschlagenen Bauteils, das als Panzerstahlplatte mit gitterförmiger Bauteilstruktur aus gebildet ist, in zwei verschiedenen Phasen beim Beschuss mit einem Geschoss;
- Figuren 6A-6d: jeweils ausschnittsweise eine Ausführungsvariante eines vorgeschlagenen Bauteils mit einer gitterförmigen, aus Elementarzellen aufgebauten Bauteilstruktur, wobei in den Figuren 6A bis 6D Abmessungen, Stegdicken und Volumenfüllgrade der Elementarzellen variiert sind, sodass die gitterförmigen Bauteilstrukturen auf unterschiedlichen Kraft-Weg-Kennlinien ausgelegt sind;
- Figur 7: ein Kraft-Weg-Diagramm mit Darstellung unterschiedlicher Kennlinien für die Auslegung einer gitterförmigen Bauteilstruktur der Figuren 6A bis 6D;
- Figur 8: ausschnittsweise eine gitterförmige Bauteilstruktur unter Hervorhebung einer Referenzzelle für den Aufbau der gitterförmigen Bauteilstruktur genutzten Gitters.

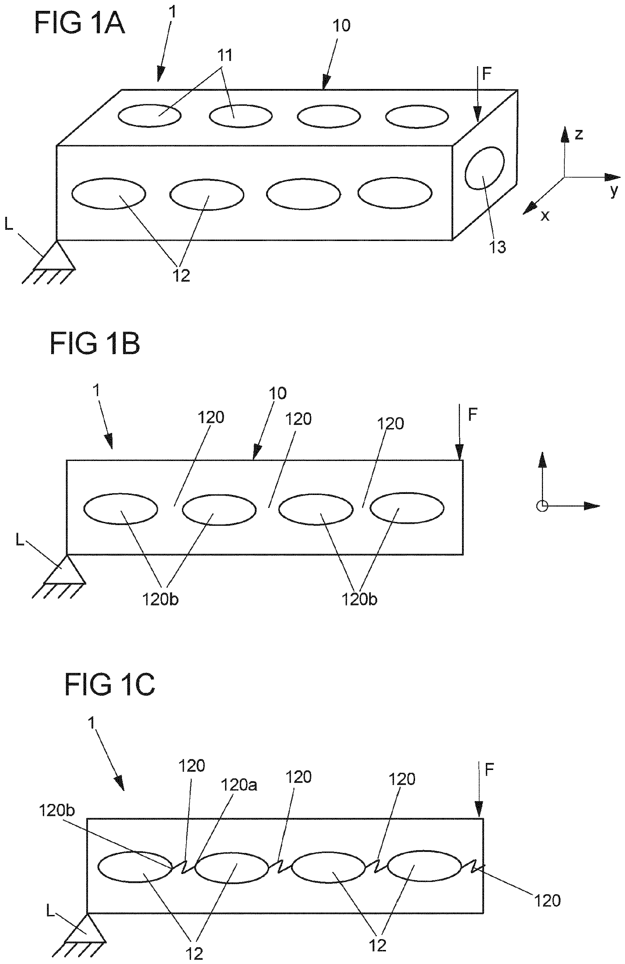

Die Figuren 1A bis 1F zeigen schematisch eine Ausführungsvariante eines vorgeschlagenen Bauteils 1, das mit einer Kraft F belastet wird. Bei der Kraft F handelt es sich vorliegend exemplarisch um eine Biegekraft, die zu einem Moment auf das Bauteil 1 um eine Lagerstelle L führt, an dem das Bauteil 1 fixiert ist. Bei dem Bauteil 1 kann es sich beispielsweise um eine Komponente für ein Fahrzeug, zum Beispiel für einen Fahrzeugsitz handeln und einen Crashabsorber bilden. Derartige Crashabsorber werden insbesondere für auftretende Crash-Fälle und damit einhergehende übermäßige Belastungen ausgelegt, um gezielt (Crash-) Energie zu absorbieren. Das Bauteil 1 integriert daher vorliegend mehrere (mindestens zwei) auf unterschiedlichen Wirkprinzipien basierende Energieabsorptionsmechanismen, die bei der auf das Bauteil 1 wirkenden und einen Schwellwert übersteigenden Kraft F aktivierbar sind und erst ein Versagen des Bauteils 1 gestatten, wenn das Bauteil 1 ein vergleichsweise großes Maß an Energie absorbiert hat.

Das Bauteil 1 ist hierfür vorliegend mit einer gitterförmigen Bauteilstruktur 10 ausgebildet und erstreckt sich entlang dreier zueinander senkrechter Raumrichtungen x, y und z. Durch die gitterförmige Bauteilstruktur 10 des Bauteils 1 ist in jeder von drei zueinander senkrechten Querschnittsansichten, d.h., in einer xy-Ebene, einer xz-Ebene und einer yz-Ebene, jeweils eine Gitterstruktur gebildet aus einem Muster hier gleichmäßig verteilt angeordneter Aussparungen 11, 12 oder 13 ersichtlich. Die gitterförmige Bauteilstruktur 10 mit den Aussparungen 11, 12 und 13, die in den Figuren 1A bis 1F exemplarisch im Querschnitt jeweils ellipsenförmig dargestellt sind, sind derart gestaltet und dimensioniert, dass bei der den Schwellwert übersteigenden Kraft F auf das Bauteil 1, zum Beispiel infolge eines Crashs, miteinander verkettete, zeitlich aufeinanderfolgende Energieabsorptionsmechanismen innerhalb der gitterförmigen Bauteilstruktur 10 aktiviert werden, um wenigstens einen Teil der durch die Kraft F in das Bauteil 1 eingebrachten (Crash-) Energie zu absorbieren.

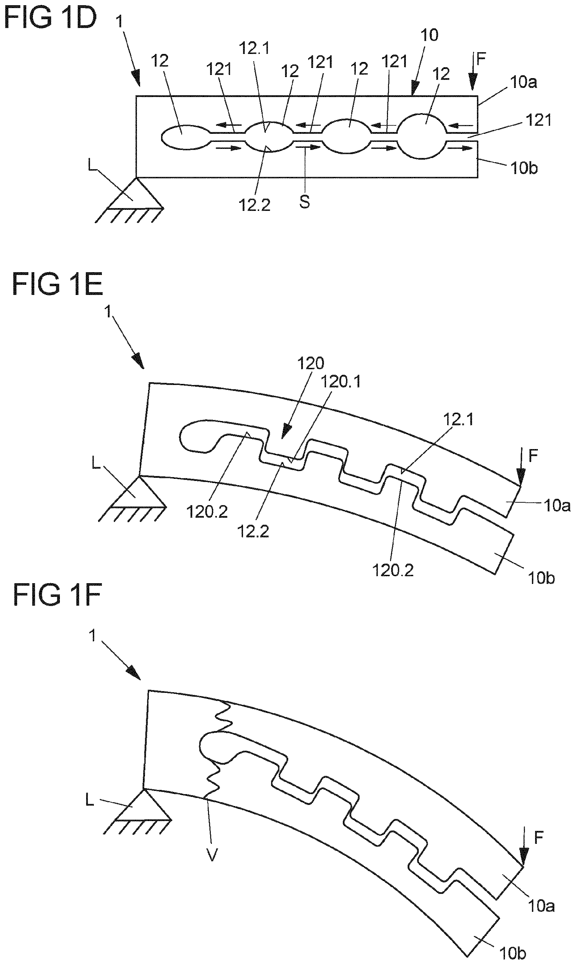

Bei der dargestellten Ausführungsvariante wirkt die Kraft F in der Figur 1A entlang der Richtung -z und führt aufgrund ihrer den Schwellwert übersteigenden Höhe zunächst zu einer plastischen Verformung des Bauteils 1, über die bereits ein Teil der Energie absorbiert wird. Die in einer Querschnittsansicht entlang der yz-Ebene ersichtliche Aussparungen 12 sind in y-Richtung derart dimensioniert und über als erste Kontaktbereiche fungierende Trennwände 120 voneinander getrennt, dass im Bereich entlang der y-Richtung liegender Mantelfläche der Aussparungen 12 die größten Eigenspannungen vorliegen und damit (Soll-) Bruchstellen 120a, 120b definiert sind. An diesen Bruchstellen entstehen unter der anliegenden Kraft F und hierauf zurückgehender Scherkräfte Risse, die dann zu einer jeweils benachbarten Aussparung 12 hin und damit vorrangig in Richtung y oder -y wachsen (vergleiche Figur 1B). Im Bereich der Trennwände 120 sind somit aufgrund der Dimensionierung der gitterförmigen Bauteilstruktur 10 gezielt Bruchstellen 120a, 120b vorgesehen, an denen entlang aufgrund der Kraft F ein Riss zu entstehen beginnt (Figur 1C), der bei weiter anhaltender Kraft F zu Scherbrücken 121 der Trennwände 120 infolge resultierender Scherkräfte führt (Figur 1D).

Ein erster Energieabsorptionsmechanismus des Bauteils F ist somit über die Kombination der Aussparungen 12 und Trennwände 120 und der hieran vorgesehenen Bruchstellen 120a und 120b gebildet. Über diese Kombination und entsprechende Gestaltung der gitterförmigen Bauteilstruktur 10 wird infolge der den Schwellwert übersteigenden Kraft F auf das Bauteil 1 eine plastische Verformung des Bauteils 1 nicht nur zur Energieabsorption zugelassen. Vielmehr wird die auftretende plastische Verformung des Bauteils 1 auch die Aktivierung des auf einem anderen Wirkprinzip basierenden ersten Energieabsorptionsmechanismus genutzt, für den eine Entstehung von Scherbrüchen 121 maßgeblich ist, um Energie in dem Bauteil 1 zu absorbieren, ohne dass das Bauteil 1 komplett versagt.

Zu dem ersten Energieabsorptionsmechanismus des Bauteils 1 ist ein zweiter Energieabsorptionsmechanismus in Reihe geschaltet. Dieser zweite Energieabsorptionsmechanismus nutzt die durch einen Scherbruch 121 an einer ursprünglichen Trennwand 120 entstehende Scherflächen 120.1 und 120.2 (vergleiche Figur 1D und 1E) für die Bereitstellung eines zusätzlich Energie absorbierender Kraft-und/oder Formschlusses innerhalb der Bauteilstruktur 10. Teil des zweiten Energieabsorptionsmechanismus sind dabei jeweils zusätzlich zu einer als erstem Kontaktbereich fungierenden Trennwand 120 zwei zweite Kontaktbereiche 12.1 und 12.2, die durch Mantelflächen einer angrenzenden Aussparung 12 gebildet werden. Dabei fungiert jeder Teil einer Mantelfläche einer Aussparung 12, der sich entlang der Raumrichtung y an eine entstehende Scherfläche 120.1 oder 120.2 anschließt, als zweiter Kontaktbereich 12.1 und 12.2 des zweiten Energieabsorptionsmechanismus, mit dem eine gegenüberliegende angrenzende Scherfläche 120.1, 120.2 kraft- und/oder formschlüssig in Kontakt gebracht werden kann, wenn das Bauteil 1 weiter mit der (Biege-) Kraft F belastet wird. So entstehen durch die Scherbrüche 121 zwei aufeinander abscherende Strukturteile 10a und 10b innerhalb der Bauteilstruktur 10. Die Scherbrüche 121 führen folglich zur Verbindung einzelner Aussparungen 12 miteinander. Bei weiterem Abscheren der hierüber entstandenen Strukturteile 10a, 10b können die Strukturteile 10a, 10b bei einer Relativverlagerung zueinander miteinander verhaken. So tauchen dann die Scherflächen 120.1, 120.2 aufweisenden Teile der ursprünglichen Trennwand 120 wechselseitig in die zurückgesetzten Bereiche der Aussparungen 12 ein und bilden einen Kraft- und/oder Formschluss, der der Kraft F eine zusätzliche Widerstandskraft entgegengesetzt. Aussparungen 12 und Trennwände 120 können in der gitterförmigen Bauteilstruktur 10 ferner auch derart dimensioniert sein, dass bei anhaltend anliegender Kraft F - und einer damit einhergehenden, weiteren Abscherung der Strukturteile 10a und 10b - ein Überspringen der zahnartig vorstehenden, die Scherflächen 120.1 und 120.2 ausbildenden Teile der (gebrochenen / gerissenen) Trennwände 120 in entlang der y-Richtung angrenzende zurückgesetzte Bereiche der ursprünglichen Aussparungen 120 auftritt.

Erst nachdem auch über den nachgeschalteten und damit in Reihe zu dem ersten Energieabsorptionsmechanismus geschalteten zweiten Energieabsorptionsmechanismus keine weitere Energie mehr absorbiert werden kann und mithin die Kraft F auf das Bauteil 1 weiter aufrechterhalten bleibt, versagt das Bauteil 1 über einen Versagensriss V in einem lagernahen Bereich entsprechend der Figur 1F.

Durch die Auslegung der Bauteilstruktur 11 sind mehrere Energieabsorptionsmanagement in Reihe geschaltet, wodurch sich die Effektivität für eine Absorption von durch eine von außen aufgebrachte Kraft F signifikant gegenüber konventionellen Bauteilstrukturen erhöht hat. In der Auslegung der (gitterförmigen) Bauteilstruktur 10 lassen sich unterschiedliche Versagensstufen vorher bestimmen und gezielt steuern und insbesondere lässt sich die Bauteilstruktur 1 für unterschiedliche Belastungsrichtungen gezielt auslegen.

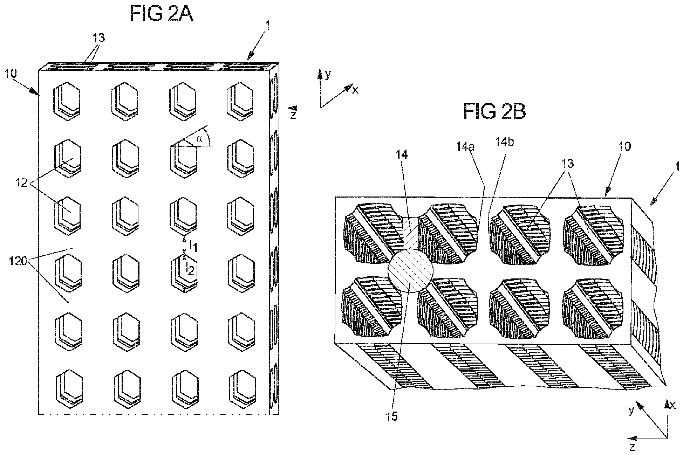

Die Figuren 2A und 2B zeigen weitere Details einer gitterförmigen Bauteilstruktur 10 für ein Bauteil 1 der Figuren 1A bis 1F. Hierbei sind aus den Figuren 2A und 2B insbesondere unterschiedliche Muster für die der Bauteilstruktur 10 in zueinander senkrechten Querschnittsansichten zugrunde liegenden Gitter ersichtlich. Während die Aussparungen 12 in der yz-Ebene jeweils sechseckig ausgebildet sind, sind die in einer Draufsicht entlang der y oder -y-Richtung und damit in einer xz-Ebene liegenden Aussparungen 13 jeweils hierzu geometrisch unähnlich und achteckig. Im Übrigen sind auch die Dicken der zwischen den einzelnen Aussparungen 12 und 13 liegenden (stegförmigen) Trennwände 120 oder 14 unterschiedlich.

Die unterschiedliche geometrische Ausgestaltung der gitterförmigen Bauteilstruktur 10 in den unterschiedlichen zueinander senkrechten Querschnittsansichten resultiert insbesondere aus der Integration der unterschiedlichen Energieabsorptionsmechanismen in die Bauteilstruktur 10, über die bei einer Belastung durch eine von außen aufgebrachte Kraft auf das Bauteil 1 entstehende plastische Verformungen und in die Bauteilstruktur 10 eingebrachte Scherkräfte gezielt steuerbar sind. So sind beispielsweise Tragabschnitte 15 der gitterförmigen Bauteilstruktur 10, die in einer in der xz-Ebene liegenden Querschnittsansicht in einem Kreuzungspunkt von vier Trennwänden liegen, um den vier Aussparungen 13 gleichmäßig verteilt angeordnet sind, mit einem größeren tragenden Querschnitt und damit einem größeren Widerstandsmoment ausgebildet als die angrenzenden, sich kreuzenden Trennwände 14. Damit ist sichergestellt, dass bei einer entlang der z-Richtung wirkenden (Biege-) Kraft auf das Bauteil 1 und seine gitterförmige Bauteilstruktur 10 eine plastische Verformung nicht in dem Tragabschnitt 15, sondern in einer angrenzenden Trennwand 14 zu einem Scherbruch 121 führt.

Um die Bruchneigung an der Trennwand 14 sowie Ort und Verlauf eines Bruchs gezielt zu beeinflussen, ist beispielsweise etwa mittig an jeder Trennwand 14 eine Taillierung vorgesehen, die etwas mittig zu einer reduzierten Wandstärke und damit zu einer sich in y-Richtung erstreckenden Einkerbung resultiert. An einem Bereich reduzierter Wandstärke sind auf diese Art und Weise gezielt Bruchstellen 14a und 14b entlang der Einkerbungen für einen Scherbruch definiert.

Um ferner bei dem mit den Figuren 1A bis 1F geschilderten Abscheren zweier durch Scherbrüche entstehenden Strukturteile 10a und 10b die Entstehung eines Energie absorbierender Kraft- und/oder Formschlusses und das Verhaken der Strukturteile 10a, 10b an den Kontaktbereichen 120 und 12.1, 12.2 zu unterstützen, sind - in y-Richtung gemessene - (Aussparungs-) Längen I₂ der in y-Richtung aufeinander folgenden Aussparungen 12 größer gewählt als (Wand-) Längen I₁ einer jeweils zwischen zwei Aussparungen 12 vorgesehenen Trennwand 120.

Über einen Winkel α einer im Umfang einer jeden sechseckigen Aussparung 12 definierten Flanke lässt sich dabei auch steuern, inwieweit nach einem Scherbruch ein zusätzlich und gegebenenfalls mehrfaches (mindestens zweimaliges) Überspringen der die Scherflächen 120.1 und 120.2 aufweisenden Teile einer gebrochenen Trennwand 120 und der durch die Aussparungen 12 definierten zweiten Kontaktbereiche 12.1 und 12.2 auftritt. Der (Flanke-) Winkel α definiert dabei eine Neigung einer Flanke an einer Aussparung 12 bezüglich der Raumrichtung y, wobei sich diese Flanke entlang einer Kante der sechseckigen Grundform einer in der yz-Ebene ersichtlichen Aussparung 12 erstreckt und an einer Bruchstelle 120a oder 120b mündet. Entlang der entsprechenden Flanke kann folglich bei Auftreten eines Scherbruchs 121 eine Scherfläche 120.1, 120.2 in den gegenüberliegenden Teil der einer angrenzenden Aussparung 12 hineingleiten.

Ist der zweite Energieabsorptionsmechanismus über die miteinander verhakenden, abscherende Strukturteile 10a, 10b aktiv, addiert sich zu einem der Verformung des Bauteils 1 entgegenwirkenden und von den Tragabschnitten 15 aufgebrachten Widerstandskraft eine zusätzliche Widerstandskraft aufgrund der sich überlappenden, verhakenden Strukturteile 10a, 10b. Derart wird die endgültige Festigkeit bis zum Auftreten des Versagensrisses V zumindest temporär signifikant erhöht.

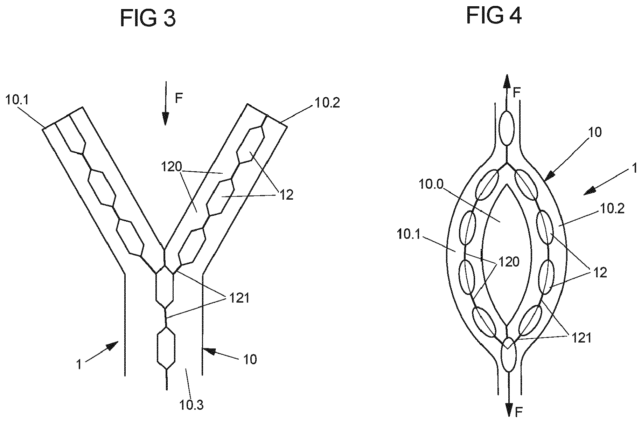

Das den Ausführungsbeispielen der Figuren 1A bis 1F zugrunde liegende Prinzip ist letztlich unabhängig von der Geometrie des Bauteils 1. Beispielsweise kann das vorgeschlagene Prinzip auch bei einem Bauteil 1 einer Figur 3 zum Einsatz kommen. Hier ist das Bauteil 1 mit einer gitterförmigen Bauteilstruktur 10 an einem Endabschnitt ausgebildet, der in der Figur 3 Y-förmig ist. Der Endabschnitt des Bauteils 1 weist damit zwei unter einem Winkel zueinander erstreckte Bauteilarme 10.1 und 10.2 auf, die von einer gemeinsamen Bauteilbasis 10.3 vorstehen. Sowohl in den Bauteilarmen 10.1 und 10.2 als auch in der Bauteilbasis 10.3 sind entlang einer jeweiligen Erstreckungsrichtung aufeinanderfolgende Aussparungen 12 entsprechender der Ausführungsvarianten der Figuren 1A bis 2B vorgesehen. An den Trennwänden 120 zwischen diesen Aussparungen 12 sind erneut gezielt (Soll-) Bruchstellen 120a, 120b für eine definierte Rissentstehung und ein definiertes Risswachstum vorgesehen. Die Gestaltung des zugrundeliegenden Gitters ist dementsprechend so gewählt, dass sich Scherbrüche 121 in den Trennwänden 120 derart ausbilden, dass hierüber unter plastischer Verformung des Bauteils 1 aneinander angrenzende Aussparungen 12 miteinander verbunden werden.

Gleiches trifft bei einer Ausführungsvariante entsprechend der Figur 4 zu. Hier ist das Bauteil 1 exemplarisch mit einer O-förmigen Bauteilöffnung 10.0 versehen, die umfangsseitig durch zwei einander gegenüberliegende Bauteilarme 10.2 und 10.2 berandet ist. Auch diese Bauteilarme 10.1, 10.2 wie auch die sich hieran anschließenden Bereiche der Bauteilstruktur 10 des Bauteils 1 sind jeweils gitterförmig mit mehreren Aussparungen 12 und mit Bruchstellen 120a, 120b versehenen (stegförmigen) Trennwänden 120 ausgebildet.

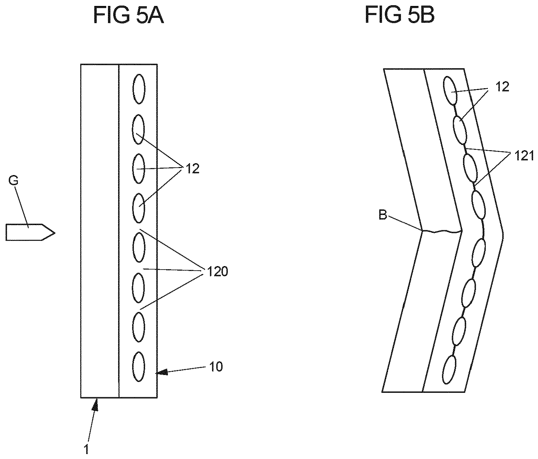

Die Figuren 5A und 5B zeigen die Nutzung einer Bauteilstruktur 10 in einem Energie absorbierenden Bauteil 1, das als Panzerstahlplatte ausgebildet ist. Hier wirkt eine einen Schwellwert überschreitende Kraft auf das Bauteil 1 über ein Geschoss G ein. Infolge der Wucht des Geschosses G verformt sich das Bauteil 1 plastisch an einer Biege- oder Knickstelle B. Auch hier sind infolge der auftretenden plastischen Verformung entlang aufeinanderfolgender Trennwände 120 und Aussparungen 12 einer gitterförmigen Bauteilstruktur 10 eine Vielzahl von Energie absorbierender Scherbrüche 121 zugelassen, ohne dass es zu einem kompletten Versagen des Bauteils 1 kommt. Auf einander abscherende Strukturteile und damit Bruchstücke des Bauteils 1 werden hierbei weiter gehalten und die Panzerplatte kann weiteren Beschuss aushalten.

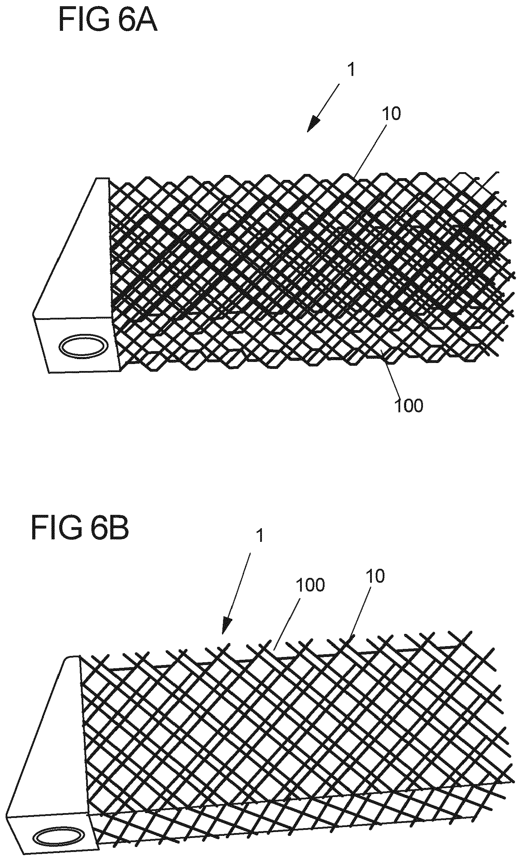

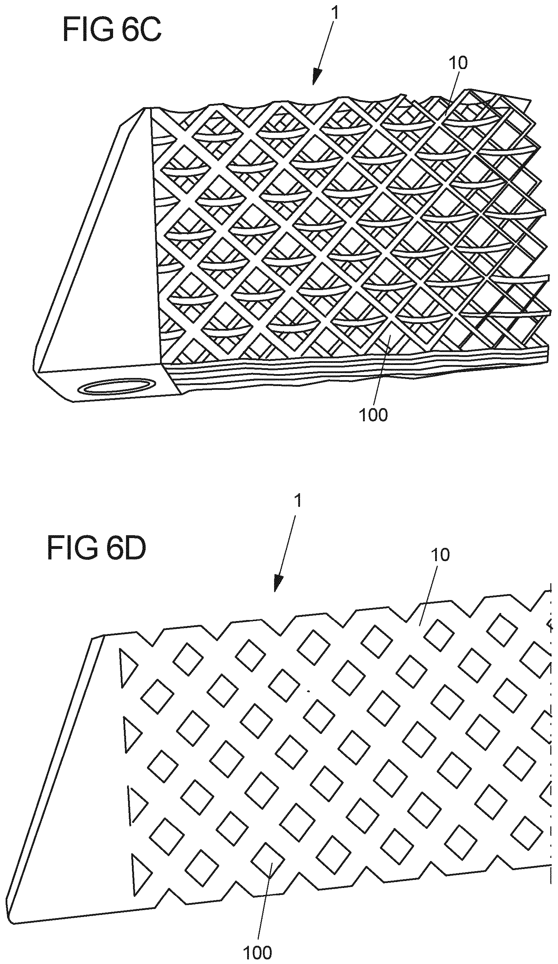

Die Figuren 6A, 6B, 6C und 6D zeigen ein weiteres Ausführungsbeispiel eines Bauteils 1 mit unterschiedlich gestalteter gitterförmiger Bauteilstruktur 10. Das Bauteil 1 kann hierbei die im Zusammenhang mit den Figuren 1A bis 5B erläuterten Energieabsorptionsmechanismen integrieren. Zum vereinfachten und nutzungsbezogenen Anpassen der gitterförmigen Bauteilstruktur 10 im Rahmen einer der Fertigung vorgelagerten Auslegung ist die gitterförmige Bauteilstruktur 10 aus Gittern mit identisch ausgestalteten Elementarzellen 100 aufgebaut. Jede Elementarzelle 100 geht dabei auf eine allen Bauteilstrukturen der Figuren 6A bis 6D zugrundeliegende Referenzzelle 100R zurück, die lediglich in Abhängigkeit bestimmter Bauteilparameter variiert ist. So ist letztlich lediglich über Anpassungen der Elementarzellen und eines damit gebildeten Gitters jedes Bauteil 1 der Figuren 6A bis 6D für unterschiedliche Anforderungen angepasst, ohne dass sich die Abmessungen des Bauteils 1 und dessen Außenkontur unterscheiden müssen. Insbesondere lässt sich über eine Variation einer Elementarzelle 100 und eines damit gebildeten Gitters der Bauteilstruktur 10 eine einfache Auslegung an unterschiedliche Kennlinien erreichen.

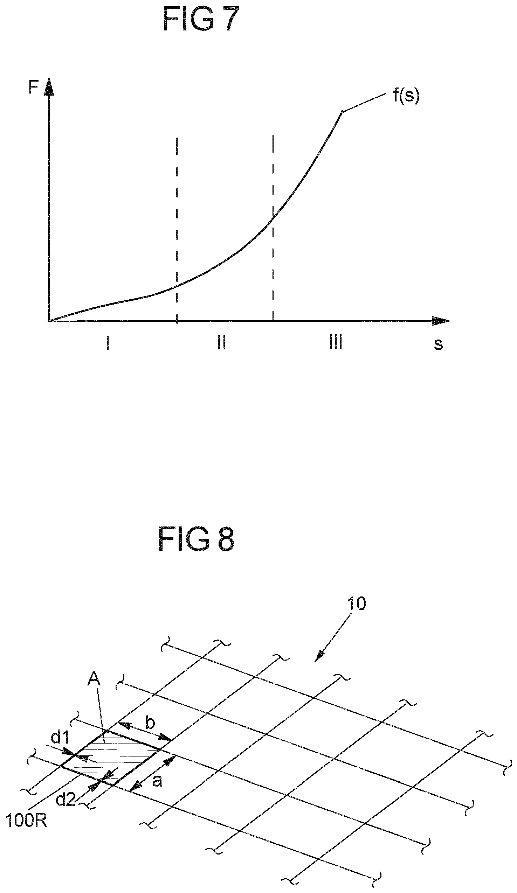

Eine maßgebliche Kenlinie mit unterschiedlichen Bereichen ist hierbei anhand der Figur 7 gezeigt. Die Kennlinie f zeigt den Grad einer Verformung s eines Bauteils 1 in Abhängigkeit von einer Kraft F bis zum Versagen an. In unterschiedlichen Bereichen I, II und III weist die Kenlinie unterschiedliche Steigungen auf. Die einzelnen Bereiche I, II und III können beispielsweise den Anforderungen für unterschiedliche Nutzungsszenarien einer mit dem Bauteil 1 gebildeten Sitzkomponente entsprechen. So ist der Verlauf der Kenlinie im Bereich I für eine typischerweise ein Kind tragende Sitzkomponente, die Kennlinie im Bereich II für eine einen "leichten" Erwachsenen tragende Sitzkomponente (50 Perzentil des Gewichts) und die Kennlinie im Bereich III für eine einen "schweren" Erwachsenen tragende Sitzkomponente (95 Perzentil des Gewichts) vorgesehen. Je nach gewünschter Kennlinie respektive Kennlinienbereich I, II, III kann die gitterförmige Bauteilstruktur 10 durch Variation der jeweiligen Elementarzellen 100 variiert und damit hinsichtlich ihrer Energieabsorptionsfähigkeit, gegebenenfalls um mehrere Größenordnungen, angepasst werden.

Die gitterförmige Bauteilstruktur 10 kann hierbei durch die Geometrie der Elementarzellen 100, die Dicke der Elementarzellen 100 von einer trennenden Stege und einen (Volumen-) Füllgrad einfach angepasst und hergestellt werden, z.B. additiv. Ausgangspunkt ist hierbei beispielsweise eine in der Figur 8 exemplarisch dargestellte Referenzzelle 100R einer gitterförmigen Bauteilstruktur 10. Dieser Referenzzelle 100R weist dabei eine Querschnittsfläche A, definiert durch Kantenlängen a, b auf. Die angrenzenden Stege weisen eine Stegbreite oder Wandstärke d1 und d2 auf. Insbesondere die Fläche A, die Kantenlängen a, b und die Stegbreiten d1, d2 können im Rahmen einer Auslegung variiert werden, um ein an veränderte Anforderungen angepasstes Gitter und hierauf aufbauend eine gitterförmige Bauteilstruktur 10 vorzugeben. Insbesondere lässt sich hierüber über einen einfachen Modellierungsprozess ein Bauteil 1 für unterschiedliche Anwendungsfälle mit variierter Gitterstruktur 10 vorgeben, ohne an den Abmessungen des Bauteils 1 selbst, also insbesondere dessen beanspruchtes Bauraumvolumen etwas ändern zu müssen. Über eine Anpassung der gitterförmigen Bauteilstruktur 10 lässt sich beispielsweise aber die Energieabsorptionsfähigkeit pro Volumen respektive pro kg Gewicht des Bauteils 1 verändern. Insbesondere kann mit der gitterbasierten respektive referenzzellenbasierten Gestaltung des Bauteils 1 unterschiedlichen Design-, Bauraum-, Gewichts-, Sicherheit-und Performancewünschen Rechnung getragen werden, ohne das grundsätzliche Design des Bauteils 1 und dessen Außenkontur signifikant verändern zu müssen. Es wird lediglich eine der jeweiligen Gitterstruktur zugrunde zu legende Elementarzelle 100 auf Basis der vordefinierten Referenzzelle 100R variiert.

Insbesondere kann das Bauteil auch unterschiedliche Abschnitte und damit Zonen ausbilden, die sich hinsichtlich des für die Gitterstruktur zugrunde gelegten Gitters voneinander unterscheiden. Wenigstens zwei Abschnitte des Bauteils sind somit jeweils in einer gitterförmigen Bauteilstruktur ausgebildet, hierbei jedoch mit unterschiedlich gestalteten Gittern, deren Elementarzellen 100 sich also hinsichtlich ihrer Variation ausgehend von der Referenzzelle 100R voneinander unterscheiden.

Die gitterförmigen Bauteilstrukturen 10 der dargestellten Ausführungsvarianten der Figuren 1A bis 8 können grundsätzlich im Wege additiver Fertigung hergestellt sein. Auf ein derartiges Fertigungsverfahren ist die vorgeschlagene Lösung jedoch nicht festgelegt.

### Bezugszeichenliste

- 1: Bauteil
- 10: Bauteilstruktur
- 10.0: Bauteilöffnung
- 10.1, 10.2: Bauteilarm
- 10.3: Bauteilbasis
- 100: Elementarzelle
- 100R: Referenzzelle
- 10a, 10b: Strukturteil
- 11: (erster Typ) Aussparung
- 12: (zweiter Typ) Aussparung
- 12.1, 12.2: Zweiter Kontaktbereich
- 120: Trennwand / Erster Kontaktbereich
- 120.1, 120.2: Scherfläche
- 120a, 120b: Bruchstelle
- 121: (Scher-) Bruch
- 13: (dritter Typ) Aussparung
- 14: Trennwand
- 14a, 14b: Bruchstelle
- 15: Tragabschnitt
- A: Fläche
- a, b: Kantenlänge
- B: Biege- / Knickstelle
- d1, d2: Stegbreite / Wandstärke
- F: Kraft
- G: Geschoss
- L: Lager
- I₁, I₂: Länge
- S: Scherkraft
- V: Versagensriss
- α: Flankenwinkel

## Patentansprüche

1. Bauteil, das für eine Energieabsorption bei einer auf das Bauteil (1) einwirkenden Kraft (F) vorgesehen ist,
**dadurch gekennzeichnet, dass**
das Bauteil (1) mit einer wenigstens einen ersten Energieabsorptionsmechanismus und wenigstens einen zweiten Energieabsorptionsmechanismus integrierenden Bauteilstruktur (10) ausgebildet ist, mit der bei einer auf das Bauteil (1) einwirkenden und einen Schwellwert übersteigenden Kraft die ersten und zweiten Energieabsorptionsmechanismen aktivierbar sind.

2. Bauteil nach Anspruch 1, **dadurch gekennzeichnet, dass** mit der Bauteilstruktur (10) bei einer auf das Bauteil (1) einwirkenden und einen Schwellwert übersteigenden Kraft die ersten und zweiten Energieabsorptionsmechanismen zeitlich aufeinanderfolgend aktivierbar sind, sodass zumindest ein Teil der über die einwirkende Kraft (F) in das Bauteil (1) eingebrachten Energie über den ersten Energieabsorptionsmechanismus absorbiert wird, bevor der wenigstens eine zweite Energieabsorptionsmechanismus aktiviert wird.

3. Bauteil nach Anspruch 1 oder 2, **dadurch gekennzeichnet, dass** eine Aktivierung wenigstens eines der ersten und zweiten Energieabsorptionsmechanismen eine plastische Verformung mindestens eines Abschnitts der Bauteilstruktur (10) voraussetzt.

4. Bauteil nach Anspruch 3, **dadurch gekennzeichnet, dass** wenigstens einer der ersten und zweiten Energieabsorptionsmechanismen innerhalb der Bauteilstruktur (10) Bruchstellen (120a, 120b; 14a, 14b) für einen Bruch oder mehrere Brüche, insbesondere einen Scherbruch oder mehrere Scherbrüche definiert.

5. Bauteil nach Anspruch 3, **dadurch gekennzeichnet, dass** wenigstens eine Bruchstelle (120a, 120b; 14a, 14b) an einem mindestens eine Aussparung (12, 13) in der Bauteilstruktur (10) berandenden Bereich (120; 14) der Bauteilstruktur (10) vorgesehen ist, wobei der berandende Bereich (120; 14) zwischen zwei Aussparungen (12; 13) in der Bauteilstruktur (10) vorliegt, sodass, bei einer den Schwellwert übersteigenden Kraft auf das Bauteil (1), ein an der wenigstens einen Bruchstelle (120a, 120b, 14a, 14b) entstehender Scherbruch zwischen den zwei Aussparungen (12; 13) verläuft und zu einer Verbindung der zwei Aussparungen führt.

6. Bauteil nach einem der vorhergehenden Ansprüche, **dadurch gekennzeichnet, dass** einer der ersten und zweiten Energieabsorptionsmechanismen eine Schnittstelle (12.1, 12.2) innerhalb der Bauteilstruktur (10) für einen Energie absorbierenden Kraft-und/oder Formschluss bei einer den Schwellwert überschreitenden Kraft (F) auf das Bauteil (1) umfasst.

7. Bauteil nach Anspruch 6, **dadurch gekennzeichnet, dass** der zweite Energieabsorptionsmechanismus die Schnittstelle (12.1, 12.2) umfasst und der erste Energieabsorptionsmechanismus wenigstens einen mit der Schnittstelle (12.1, 12.2), bei einer den Schwellwert übersteigenden Kraft auf das Bauteil (1), zumindest teilweise kraft- und/oder formschlüssig in Kontakt bringbaren ersten Kontaktbereich (120) definiert.

8. Bauteil nach Anspruch 7, **dadurch gekennzeichnet, dass** die Schnittstelle von mindestens einem zumindest teilweise gegenüber einem angrenzenden Bereich (120) der Bauteilstruktur (10) zurückgesetzten zweiten Kontaktbereich (12.1, 12.2) gebildet ist, in den wenigstens ein Teil des ersten Kontaktbereichs (120), bei einer den Schwellwert übersteigenden Kraft auf das Bauteil (1) und unter plastischer Verformung wenigstens eines Abschnitts des Bauteils (1), eingreifen kann.

9. Bauteil nach Anspruch 4 oder 5 und nach Anspruch 7 oder 8, **dadurch gekennzeichnet, dass** der erste Kontaktbereich (120) mindestens eine der Bruchstellen (120a, 120b) für einen Scherbruch aufweist.

10. Bauteil nach Anspruch 9, **dadurch gekennzeichnet, dass** der erste Kontaktbereich (120) in der Bauteilstruktur (10) derart ausgebildet und dimensioniert ist, dass bei einer den Schwellwert übersteigenden Kraft (F) auf das Bauteil (1) an dem ersten Kontaktbereich (120) mindestens ein Scherbruch auftritt und eine gegenüber dem angrenzenden zweiten Kontaktbereich (12.1, 12.2) vorstehende Scherbruchfläche (120.1, 120.2) entsteht, die bei weiter auf das Bauteil (1) einwirkender Kraft (F) in kraft- und/oder formschlüssigen Kontakt mit dem zweiten Kontaktbereich (12.1, 12.2) gebracht wird.

11. Bauteil nach Anspruch 10, **dadurch gekennzeichnet, dass** der zweite Kontaktbereich (12.1, 12.2) eine Mantelfläche einer Aussparung (12) umfasst.

12. Bauteil nach Anspruch 11, **dadurch gekennzeichnet, dass** der erste Kontaktbereich (120) durch eine Trennwand zwischen zwei Aussparungen (12) gebildet ist, die sich mit einer Wandlänge (I₁) entlang einer Raumrichtung (y) erstreckt, wobei die Wandlänge (I₁) geringer ist als eine Aussparungslänge (I₂), mit der sich jede der zwei Aussparungen (12) entlang derselben Raumrichtung (y) erstreckt.

13. Bauteil nach einem der vorhergehenden Ansprüche, **dadurch gekennzeichnet, dass** die Bauteilstruktur (10) gitterförmig ausgebildet ist und sich die gitterförmige Bauteilstruktur (10) entlang dreier zueinander senkrechter Raumrichtungen (x, y, z) erstreckt, wobei in zwei zueinander senkrechten Querschnittsansichten eine Gitterstruktur jeweils mit in einem Muster angeordneten Aussparungen (11, 12, 13) gebildet ist und die Aussparungen (12, 13) zweier Querschnittsansichten unterschiedlich sind.

14. Bauteil nach Anspruch 13, **dadurch gekennzeichnet, dass** sich die Aussparungen (12, 13) zweier Querschnittsansichten hinsichtlich ihrer Abmessungen und/oder hinsichtlich ihrer jeweiligen geometrischen Form voneinander unterscheiden und/oder dass in einer Querschnittsansicht vier um einen Tragabschnitt (15) der gitterförmigen Bauteilstruktur (10) verteilt angeordnete Aussparungen (13) vorhanden sind, wobei der Tragabschnitt (15) in einem Kreuzungspunkt von die Aussparungen (13) berandenden Trennwänden liegt und der Tragabschnitt (15) ein größeres Widerstandsmoment aufweist als jede der vier Trennwände (120).

15. Baugruppe für ein Fahrzeug, insbesondere als Teil einer Komponente für einen Fahrzeuginnenraum, als Teil eines Fahrzeugsitzes oder als Teil einer Fahrzeugtür, aufweisend ein Bauteil nach einem der vorhergehenden Ansprüche.
